# EUROPEAN PATENT APPLICATION

(11) **EP 2 511 693 A1**
(43) Date of publication of application: **17.10.2012**
(21) Application number: 11162230.4
(22) Date of filing: 13.04.2011
(51) Int. Cl.: G01N 21/64

(54) **Analysis System with a spectrally controlled light source**

(71) Applicant: F. Hoffmann-La Roche AG, 4070 Basel (CH); Roche Diagnostics GmbH, 68305 Mannheim (DE)
(72) Inventor: Sarofim, Emad, 6332 Hagendorn (CH)
(74) Representative: Poredda, Andreas

(57) **Abstract**

A system for analyzing samples which comprises a spectrally controlled light source. The system comprises a light source for illuminating a sample, a driver unit for powering the light source and an analytical detector which detects light emitted from the sample or light transmitted through the sample. The spectral control unit comprises a spectral detector which receives light from the light source, a spectral evaluation and control unit which receives signals from the spectral detector, compares the signals to reference values and if a deviation is found, it controls the driver unit or a light source conditioning unit to bring the signals from the light source into conformity with the reference values.

The invention further concerns a method for analyzing samples with a spectrally controlled light source and a system which monitors light during an amplification process of nucleic acids.

## Description

### FIELD OF THE INVENTION

The present invention is located in the field of optical analysis systems for determining the presence and/or concentration of analytes in a sample. Such systems comprise a light source for illuminating a sample and a detector which detects radiation which is either emitted by the sample upon illumination (i.e. due to fluorescence and phosphorescence) or radiation which is transmitted through the sample (absorption photometry). Based on the detected radiation the presence and/or concentration of an analyte is determined.

### BACKGROUND OF THE INVENTION

It is known in the field of fluorescence measurement and photometry that the light source should have a constant intensity for illuminating the sample. For this purpose it is further known to illuminate a reference detector for measuring the overall intensity of the light source (see e.g. EP0953838). Other prior art documents as e.g. US2005/0279949 describe that intensity and spectral composition of light emitted by a LED shifts with temperature of the LED. This prior art document proposes to measure LED temperature and to either control the temperature or to correct for changes which are induced by the temperature changes.

### DESCRIPTION OF THE INVENTION

According to the present invention it has been found that it is not sufficient to control the overall intensity of a light source or to control its temperature but that it is essential to control the spectral composition of light emitted by the light source. In particular in analytical situations which are addressed by the present invention where the sample comprises a dye which absorbs illumination light it is not sufficient to have a constant overall intensity but also to have a defined intensity in the wavelength range(s) which are absorbed by the dye. According to the present invention this is achieved by a reference detector which measures a spectral composition of light from the light source and controls the light source in order to match a reference spectral composition to a sufficient degree. It has to be understood that the term "spectral composition" does not necessarily mean that a full spectral range is evaluated. According to typical embodiments of the present invention it is sufficient to determine and control the intensity in certain spectral ranges. These spectral ranges are often called bands.

The invention is directed to a system for analyzing samples with a spectrally controlled light source, wherein the system comprises
- a light source for illuminating said sample,
- a driver unit powering said light source
- an analytical detector detecting light emitted from said sample or light transmitted through said sample,
- a spectral control unit comprising
   - a spectral detector receiving light from the light source,
   - a spectral evaluation and control unit receiving signals from said spectral detector, the spectral evaluation and control unit comparing said signals to reference values and if a deviation is found, to control said driver unit or a light source conditioning unit to bring the signals from the spectral detector into conformity with the reference values.

The invention further addresses a method for analyzing samples with a spectrally controlled light source, the method comprising the steps of:
- powering the light source with a driver unit to illuminate the sample,
- detecting light emitted by said sample or being transmitted through said sample with an analytical detector
- detecting light from the light source with a spectral detector, said spectral detector transmitting signals to a spectral evaluation and control unit,
- the spectral evaluation and control unit compares said signals to reference values and controls said driver unit or a light source conditioning unit to bring the signals from the spectral detector into sufficient conformity with the reference values. Usage of the term "sufficient" resembles the fact that the degree of matching between the actual signals with the reference values has to be set according to the requirements. In case of an analytical instrument the requirements are often quite high. This means that the acceptable deviation of measured signals from the reference values would be set to less than 3 percent or event to less than 1 percent. In case of measurements where only the presence of an analyte is determined but not its actual concentration, an acceptable deviation would be higher, e.g. 5 percent of the reference value. Generally, the degree of matching actual signals with the reference values, which the system and method needs, is derived from the requirements for reliability, accuracy and precision of such a system and method, and by the relationships on how a result is generated from the measurement, especially on how such a spectral deviation influences the result generated by such a method or system.

A system according to the invention comprises a light source, an analytical detector and a spectral control unit. The system of course may comprise further elements as light filtering units, mirrors, dichroitic mirrors and an evaluation unit for evaluating light detected by the analytical detector so as to determine the presence and/or concentration of an analyte. The system further may include thermal units for controlling the temperature of the sample or units to apply thermal profiles to the sample as e.g. needed for conducting the polymerase chain reaction.

A sample according to the present invention regularly is a derivative of a natural sample. Typical natural samples in the in-vitro diagnostic field stem from the body of humans. These natural samples are often body fluids as blood, serum, salvia, sputum, but may also be tissue samples and the like. A very basic way to generate a derivative of a natural sample is by processing the natural sample by e.g. merging the sample with a reagent containing a dye for detection. Often, however, the processing for generating a useful sample is more complex. Blood e.g. normally has to be centrifuged to obtain plasma or serum which is used for the further analysis. In case of immunological analysis a portion of such plasma or serum would be merged with an immunological reagent which reacts with an analyte to be detected and which also comprises a dye which can be detected. For the detection of nucleic acids the concentration in natural samples is regularly not high enough for detection. The nucleic acids - or at least those to be detected - have to be amplified. A number of techniques are known to amplify nucleic acids as the polymerase chain reaction (PCR), ligase chain reaction and isothermal amplification. Often the nucleic acids to be amplified are isolated in advance by e.g. binding to particles or vlieses. Also in case of detecting nucleic acids a reagent comprising a dye can be added to enable optical detection. Often, however, during amplification building blocks are employed which are labeled with such dyes so that the resulting nucleic acids are labeled with the dyes. The above description is, however, exemplary, depending on the sample, the analyte to be detected and the analytical technique very different processing steps are needed to prepare a sample suitable for analysis. These techniques are, however, known to the artisan in this field. The important point for the present invention is, that the sample with which analysis is finally conducted comprises a dye so as to allow detection and/or quantification of the analyte based on a detection of the dye.

A dye according to the present invention absorbs radiation from the light source. Such dyes have an absorption spectrum what means that they absorb light of different wavelength with different intensity. Typically such dyes - especially for fluorescence measurements - only absorb light of a quite narrow wavelength band (called the excitation band). Typical dyes used for fluorescence measurements are Fluoresceine, Rhodamine, Texasred, Coumarine, PicoGreen, green fluorescent proteins (GFP), Lanthanide labels, fluorescence labeled Proteins, fluorescence labeled nucleic acids, quantum dots and their derivatives.

Fluorescence dyes are excited by illumination and emit radiation with somewhat lower frequency as the excitation light. The emitted radiation can be detected and the presence and / or concentration of the dye can be determined. The measurement of such emitted radiation is typically done normal to the direction of illumination or in inverse direction thereto. Alternatively it is possible to conduct absorption measurements. For this purpose typically dyes are employed which absorb radiation in a certain wavelength range but do not emit specific radiation. In such a setup the sample is illuminated and the intensity of light not absorbed by the dye is being measured.

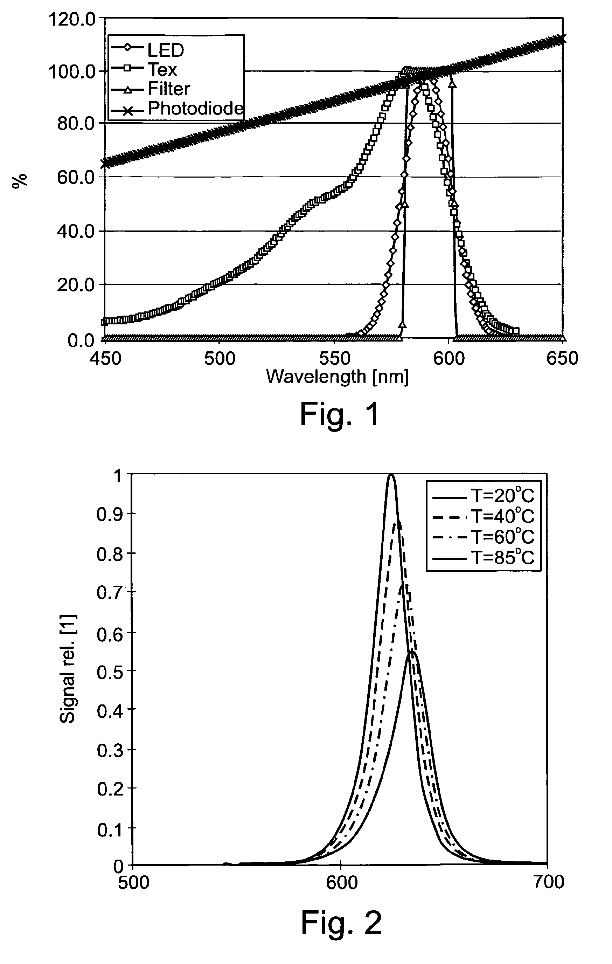

An important aspect of the present invention is a light source which is spectrally controlled. Light sources suitable for this purpose are e.g. LEDs (light emitting diodes), incandescent lamps, Neon or Xenon lamps. In recent years LEDs with sufficient power became available and have some advantages as low power consumption, low heat dissipation and long life time. A potential disadvantage of LEDs is, however, their band spectrum which only provides radiation in a relatively narrow band. The LED emission band has to overlap with the absorption band of the employed dye, otherwise no excitation or absorption takes place. This means the pair of light source and dye has to be chosen accordingly. This further means that a shift of the emission band of the light source heavily changes the energy by which the dye is excited. An other potential disadvantage of LEDs is there behavior to shift their spectra and intensity upon temperature change. Figure 1 shows the emission band of an amber colored LED and the absorption band of the dye Texasred which is quite common for analytical purposes. The emission spectrum of the LED is almost completely located in the absorption band of the dye. This results in a high excitation efficiency.

Figure 2 shows emission spectra of a red LED for four different temperatures. The abscissa showing the wavelength and the ordinate the relative intensity. It can be seen that the emission band with increasing temperature moves to higher wavelengths and further the intensity of the LED decreases. In case a fluorescence dye with an absorption maximum around 624 nm would be used the excitation with the LED at 20° C would be optimal. With increasing temperature the overlap between the emission spectrum of the LED and the absorption spectrum of the dye would, however, decrease. The intensity of the LED at the absorption wavelength of the dye decreases with increasing temperature and hence the available energy for exciting the dye decreases. Accordingly the excitation efficiency decreases as well. The decreased intensity of the light source works into the same direction as the wavelength shift, so that with increasing temperature of the LED much less excitation of the dye takes place. The temperature shift, however is only one factor influencing the emission spectrum of the LED. Aging of the LED and shifts in the power applied to the LED are other factors. Often LED materials are encased in transparent plastics for sheltering the semiconductor material and/or to provide an optical element (e.g. a body lens). Such materials which are located in the light path are aging as well and may change their optical properties which influences the light spectrum available for illuminating the dyes. According to the present invention temperature measurement is therefore not always sufficient to effectively ensure that the system is working properly. Further temperature measurement often cannot easily be done at the light emitting material itself. Measuring the temperature of the surrounding of the light source may lead to wrong conclusions.

According to the present invention the spectral output of the LED is monitored and measures are taken to keep or bring the LED into conformity with a reference spectral composition.

Such a reference spectral composition at least concerns the intensity at two or more wavelengths or wavelength bands. In a preferred embodiment a RGB sensor is employed which determines the intensity of the light source at three wavelengths (red, green and blue). Based on the needs in a particular case an artisan, however, may choose to determine the intensity of the light source at more wavelengths.

A spectral composition can be measured by detectors having a spectral sensitivity. This means that the sensitivity of the detectors to radiation depends on the wavelength of the radiation.

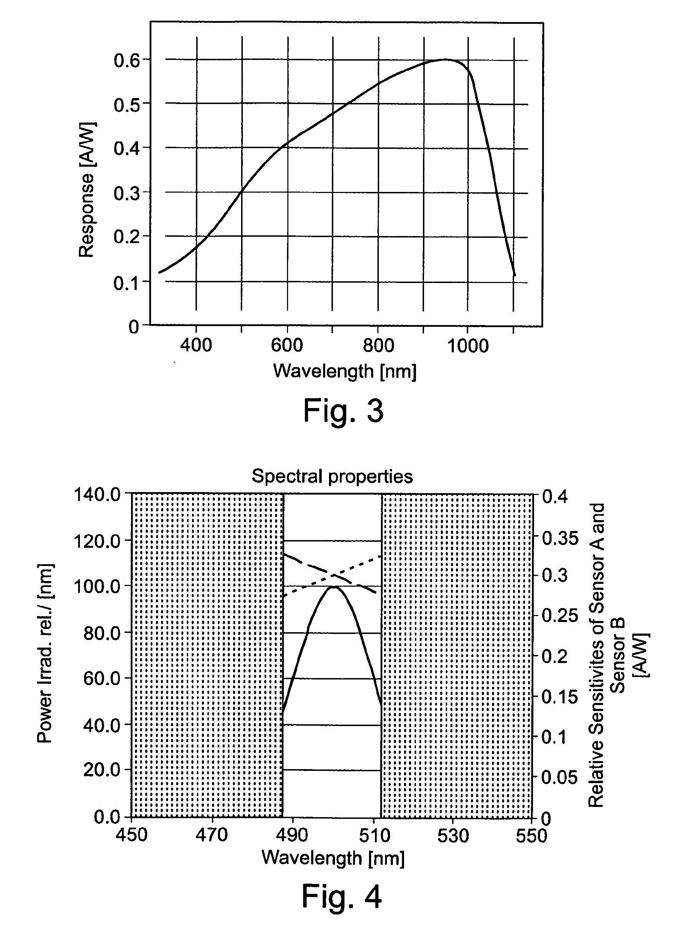

Suitable detectors are semiconductor sensors as photodiodes or phototransistors which have an intrinsic spectral sensitivity as can be seen in figure 3. As can be further seen from this sensitivity curve, the sensor output increases when the wavelength of the light source shifts to larger wavelengths. Based on measurement with a single photodiode a wavelength shift, however, can not be distinguished from a change in intensity of the light source. It is therefore necessary to employ at least two measurements which differ in their spectral sensitivity so that intensity changes can be distinguished from wavelength shifts. This can be done by measurements with two or more sensors of different spectral sensitivity. A system having two or multiple sensors may measure the spectral intensity at the two or multiple wavelengths in parallel.

A system operating with only one sensor is also possible in connection with optical filters. Such system performs subsequent measurements at two or more wavelengths or in two or more wavelength bands by employing optical filters. This e.g. can be done by using a filter wheel which switches between two or more filters.

In principle it is necessary to measure the spectral intensity at least in two different wavelength bands or at two different wavelengths to determine a spectral which enables a spectral control of the light source.

In figure 4 the intensity curve of a LED and sensitivity curves of two sensors (photodiodes) are shown. A decrease of LED intensity would result in a decreased output of both sensors, while a shift to higher wavelengths results in a decreased output of sensor B and an increased output of sensor A. An intensity change therefore can be distinguished from a wavelength shift.

A reference spectral composition in this exemplary case can be defined by a reference output for each of the two sensors. Based of the output of these two sensors the LED driver and / or a light source conditioning unit can be controlled until the sensors show the reference output and therefore the reference spectral composition of the LED would be met.

According to the terminology of the present invention the one or more detectors with wavelength dependent sensitivity or a detector with filters which are applied to obtain measurements in different wavelength ranges are called a spectral detector.

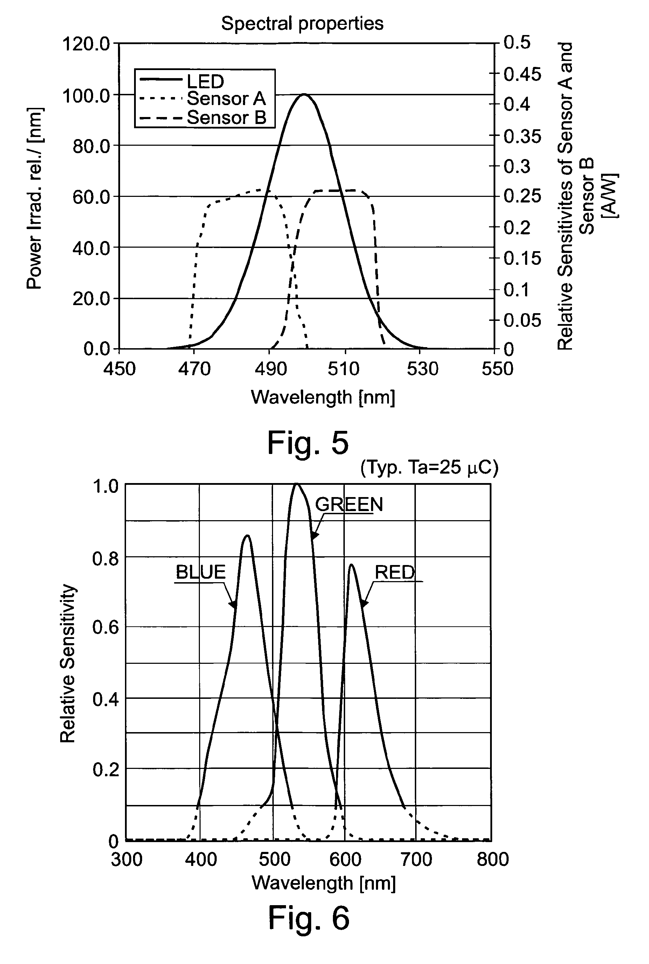

In a further embodiment such a spectral detector comprises sensors having a band sensitivity is shown in figure 5. A "band sensitivity" means that the sensors have a sensitivity in a particular wavelength band as depicted for the sensors A and B in figure 5. By using such sensors the sensitivity to wavelength shifts is even more pronounced as with those of figure 4. The sensors in figure 5 are conventional photodiodes which are equipped with band filters. Band filters transmit radiation of a particular wavelength band and block radiation outside this band.

Figure 6 shows the sensitivity of a commercially available RGB (i.e. a red, green blue detector unit) sensor. As can be seen sensor **B** has a principal sensitivity at 450 nm (blue light), sensor **G** at 550 nm (green light) and sensor **R** at 650 nm (red light). It can be appreciated that by monitoring the output of these three sensors a wavelength shift of the light source can be detected and the light source power unit and / or the light source conditioning unit can be controlled until the three sensors of the RGB sensor provide an output according to reference values and hence until a reference spectral output is reached.

The spectral control unit according to the present invention comprises the already mentioned spectral detector as well as a spectral evaluation and control unit. This spectral evaluation and control unit is set up to compare the signals from the spectral detector with reference signals. This comparison can be done by comparing the analog output of the sensors to reference values. In case of voltages this can be done by supplying the voltages to the inputs of an operational amplifier. The more common approach nowadays, however, is to convert the sensor output with an analog-to-digital converter into a digital number and to compare this number with a stored reference value. If all determined values are lower than the stored reference values this would mean that the intensity of the light source has decreased. Control of the light source accordingly means to increase the power applied to the light source. In case of e.g. a light source with principal intensity around 500 nm a decreased output of sensor B and an increased output of sensor G compared to reference values means that the band emission of the light source has shifted to larger wavelengths. A potential measure to bring the light source back to the desired spectral output is to reduce its temperature in case of a LED. In case of incandescent lamps the operating temperature, however, needs to be increased to shift emission into direction of lower wavelengths.

As can be seen from this description, the spectral evaluation and control unit includes a memory for reference values and a comparator (either hardwired electronics and / or logical circuits) which generate a signal or digital information representing a deviation from reference values.

Such deviation from reference values is being used by the spectral evaluation and control unit to either control the driver unit which powers the light source or to control the light source conditioning unit.

Driver units for the light source are set up to provide power to the light source. Light sources on semiconductor basis are powered by controlling the current supplied to the light source. Other light sources as incandescent lamps are typically powered by controlling the applied voltage. Whatever is regulated primarily, current or voltage, in the end it is the product of current and voltage which determines the applied power.

Most often the applied power is adjusted to generate an intended light intensity during design and manufacture of the system. Alternatively such adjustment may be made during usage of the system. With such an adjusted system the actual sensor outputs can be recorded as the reference values. During operation the spectral evaluation and control unit then adjusts the power applied to the light source in order to bring the actual measured detector signals into sufficient conformity with the reference values in order to bring or keep the light source in the adjusted setting and therefore in the intended wavelength band.

Figure 2 shows a temperature characteristic of a LED. As can be seen an increase of temperature causes a shift to larger wavelengths as well as a decrease in intensity. Shifting the frequency to lower wavelengths therefore can be done by reducing the power applied to the LED in order to reduce its temperature. This, however, would decrease the intensity even more. In one embodiment of the invention the intensity decrease is accepted to bring the light source into the intended spectral range and the intensity reduction is taken into account when calculating the analyte concentration based on the signal from the analytical detector. Measurements with the analytical detector often are, however, done by integration of the signal over time. When the light source intensity is decreased by a factor x then this can be compensated for by increasing the integration time by the factor x.

In another embodiment the light source is operated periodically so that the average power output and hence the temperature is decreased. Measurement with the analytical detector is then conducted in the active phases of the light source. This e.g. can be achieved by coupling the driver unit and the analytical detector with a lock-in amplifier.

In another embodiment the condition of the light source is being changed by the light source conditioning unit. This light source conditioning unit typically is a unit influencing the temperature of the light source. Temperature can be regulated by e.g. a fan cooling the light source or by a Peltier element actively cooling the light source. The light source conditioning unit then controls the intensity of the fan or the Peltier element.

Compensating for spectral shifts, however, does not always mean cooling. It can be appreciated that keeping a light source to e.g. 25°C is hard to achieve, in particular when the ambient temperature is above that value as it may happen. The light source conditioning unit therefore may comprise of or essentially consist of a heater which heats the light source to a certain temperature (reference temperature) for which reference values for the spectral output were taken. Heater intensity then can be modified in order to bring the light source into conformity with the intended spectral output. When the light source produces heat during operation the heat applied with the heater can be reduced with the effect that the light source is maintained at the desired temperature. The reference temperature advantageously is set to a temperature well above the highest expected ambient temperature such that cooling can be easily done by simple heat dissipation or by cooling with a fan.

Another aspect of the present invention is a system for amplification of nucleic acids in samples and simultaneous detection of fluorescence signals from said samples. Such a system comprises a multitude of wells containing samples containing nucleic acids and reagents for amplifying the nucleic acids.

The multitude of wells can be embodied by individual vessels but normally the well known microwell plates are used. Such microwell plates have a multitude of vessels in a standard arrangement (typically 48, 96 or 384 wells) such that these wells can easily be handled together.

The wells contain the samples and reagents for amplification of nucleic acids to be detected. Reagents for conducting the polymerase chain reaction (PCR) contain the nucleic acid bases and a polymerase for generating nucleic acid strands form the nucleic acid bases. The fluorescent dyes needed for detection and/or quantification are also contained in the reagent mix and different formats exist to generate a signal which allows to detect if a nucleic acid to be detected is present in an amount above a threshold or even to quantify it.

One suitable format is the so-called DNA binding dye format. In this format a dye as e.g. SYBR Green is employed which only shows fluorescence if it is intercalated into a nucleic acid double strand.

Another format is the TaqMan Probe format. A single stranded hybridization probe is labeled with two components. When the first component is excited with light of a suitable wavelength the absorbed energy is transferred to the second component by fluorescence energy transfer. The second component is a quencher so that emission of fluorescence is suppressed. During an annealing step the hybridization probe is degraded by the used polymerase and therefore separated from the quencher. Accordingly fluorescence is emitted by the first component upon proper illumination.

Other well known detection formats are the Molecular Beacons and FRET hybridization probes. These formats are described in more detail in US7,687, 260.

The system for analyzing samples during amplification further comprises a holder which holds the multitude of wells. Such a holder has multiple recesses which mirror the lower portion of the multiple wells so that these portion of the wells is in contact with the holder and a good heat transfer can be ensured. The holder is normally made from a material of good thermal conductivity as e.g. copper or silver. The holder in turn is thermally coupled to a thermal unit. The thermal unit is adapted to cycle the holder and hence the samples through temperature excursions. The thermal unit typically comprises one or more Peltier elements and a power unit which powers the Peltier in accordance with the signals of a thermal control unit. The thermal control unit is programmed to control the heating and cooling of the thermal unit according to desired temperature profiles. For conducting the polymerase chain reaction typically temperature is cyclically ramped between 40 degree Celsius and 90 degree Celsius and back.

As mentioned it is of advantage to monitor fluorescence from the samples during thermal cycling. For this purpose the system comprises an illumination and detection optics which is adapted to illuminate the samples and to detect fluorescent light while thermal cycling is ongoing. Such optics can be a so-called free space optics where the arrangement of sample wells is illuminated from above with a light source and emitted fluorescence is detected with an imaging detector which allows lateral evaluation (e.g. a CCD detector). Such optical systems are described in US 7,687,260 and US 7,008,789. The images from such a detector are evaluated to assign the light signals from certain pixel areas of the detector to respective wells and to determine based on the signals of those pixel areas the fluorescence emission of the wells.

Such a system for fluorescence analysis during amplification further comprises a light source for illuminating the samples in the microwells, a driver unit for powering the source and a spectral control unit. These system elements, however, have been already described herein above.

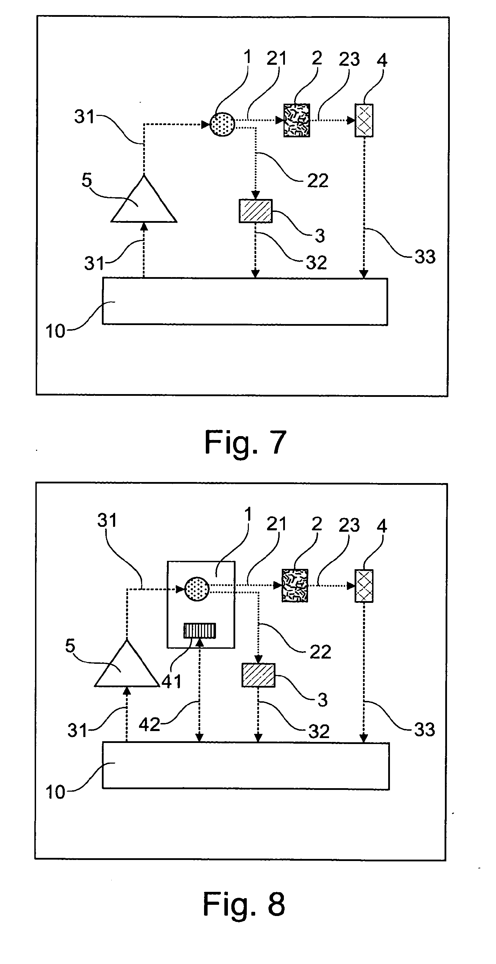

Figure 7 shows a system according to the present invention. Light source 1 is a red LED (590 nm) which e.g. can be purchased from LedEngine Inc. (LZ4-00A110). The light source illuminates a cuvette containing the sample 2 as well as a spectral detector 3. Light 23 transmitted by the sample reaches the analytical detector 4 and signals 33 from the analytical detector are transmitted to an evaluation unit 10. The evaluation unit is a computing unit which compares the signals from the analytical detector to reference values for known concentrations of the analyte in order to determine if an analyte is present in the sample. In some embodiments the concentration of the analyte is determined based on the output of the analytical sensor. In the shown embodiment the evaluation unit further generates control signals for the driver unit 5. The driver unit 5 in turn powers the light source. As can be seen in figure 7, the light source 1 further illuminates the spectral detector 3 which is embodied as the RGB sensor type S9706 from Hamamatsu. Signals 32 from the RGB sensor 3 are evaluated by the evaluation and control unit 10 to as described above to determine if the light source operates in the intended spectral range and to power the light source via the diver unit 5. Only the red and green channels of the RGB sensor were employed to determine the spectral output of the light source.

Figure 8 depicts another embodiment of the system according to the invention. Like numerals as in figure 7 denote like elements. The light source 1 illuminates a cuvette containing the sample and transmitted radiation hits a detector 4 which transmits detection signals to the spectral evaluation and control unit 10. Similar as in figure 7 the light source simultaneously illuminates a spectral detector 3 which sends its signals 32 to the spectral evaluation and control unit. An additional element compared to figure 7 is the light source conditioning unit 41. In the depicted embodiment this unit 41 is a fan which is controlled by the spectral evaluation and control unit 10. When the spectral evaluation and control unit detects a shift of the LED to higher wavelengths the fan is activated or its intensity is increased to cool the light source in order to bring it back to lower wavelengths. Similarly the fan may be shut off or decreased in intensity when the spectral evaluation and control unit detects that the wavelength of the light source has shifted to lower wavelengths as intended. The spectral evaluation and control unit is further connected to the driver unit 5 for powering the light source. With the embodiment of figure 8 it is therefore possible on one hand to control the intensity of the light source by using the driver unit 5 and simultaneously control the spectral condition of the light source by using the conditioning unit 41.

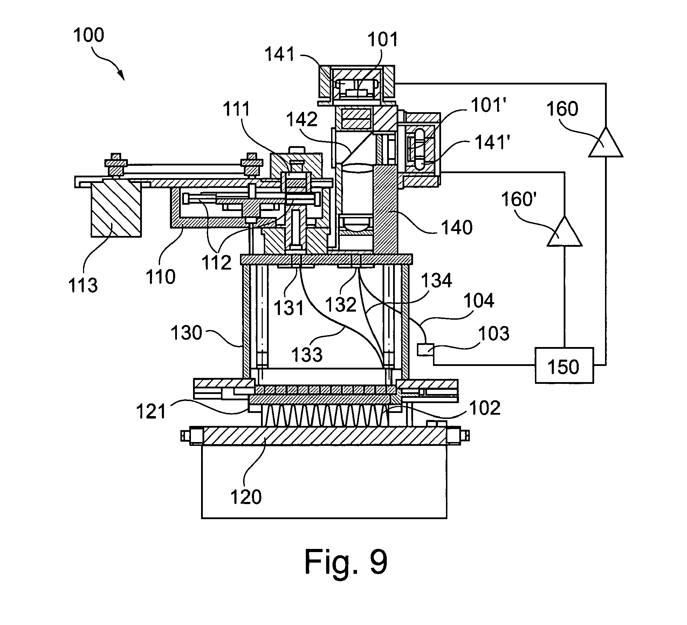

Figure 9 depicts a system for the detection of fluorescence from multiple samples in a microwell plate during the polymerase chain reaction. The samples 2 are located in the wells of a microwell plate 102 which is located in a holder. The holder and hence the samples are thermally coupled to a thermal unit 120. The thermal unit comprises a Peltier element coupled to an aluminum block for heat dissipation. The microwell plate 102 is sealed by a transparent foil and from the upper side an optical unit 130 presses the microwell pate into the holder such that a good thermal contact between microwell plate and holder is achieved. The optical unit 130 comprises a multitude of optical fibers. For sake of clarity only one pair of an excitation fiber 134 and an emission fiber 133 for one of the wells is depicted. Respective pairs of excitation and emission fibers are present for the other wells as well. The optical unit 130 comprises a through hole 132 through which light from the illumination unit 140 is coupled into the excitation fibers. The illumination unit 140 comprises a first light source 101 and a second light source 101' . Both light sources are embodied as LEDs one having a central wavelength of 470 nm and the other having a wavelength of 590 nm. Light from the light sources is guided through a lens system and falls onto a dichroitic mirror 142 which transmits and reflects light from the light sources into the excitation fibers 134 and the reference fiber 104. The excitation fibers illuminate the samples in the wells to excite the fluorescence dyes contained in the samples. The reference fiber 104 guides light onto the spectral detector 103 which is embodied as a RGB sensor. Fluorescent light emitted from the samples is guided with the emission fibers 133 via through hole 131 into the analytical detector 110. The analytical detector comprises multiple optical filters 112 arranged on a wheel which is turned by a motor 113. Light from the emission fibers 133 is filtered by the optical filter which is actually arranged in the pathway and the reaches the detector 111. The detector is embodied as a CCD (charge coupled display) which images the ends of the emission fibers. This detector generates an image of the ends of the emission fibers which is evaluated to determine the intensity of light emitted by each sample well upon illumination. From this intensity the presence and/or quantity of nucleic acids in each well can be determined. The depicted system 100 advantageously is employed to monitor the fluorescence from the wells during amplification of the nucleic acids contained in the wells. This means while the thermal unit 120 cycles the samples through temperature excursions during which the nucleic acids are amplified, the detection unit monitors fluorescence. Such online detection (also called real-time detection) allows to monitor the PCR process and provides much more information for detecting and quantifying nucleic acids as a process where only at the end of amplification fluorescence is measured.

System 100 further comprises a spectral evaluation and control unit 150 which receives signals from spectral detector 103 and compares those signals with reference values stored in the spectral evaluation and control unit 150. When a deviation from reference values is detected the spectral evaluation and control unit changes the control of driver units 160, 160' accordingly. Driver units 160, 160' are coupled to light source conditioning units 141 and 141'. These light source conditioning units comprise Peltier elements which can heat or cool the light sources 101 and 101' to bring their spectral output into the intended range, which is the case when the spectral detector provides signals matching the reference values.

## Claims

1. System for analyzing samples with a spectrally controlled light source, the system comprising
• a light source for illuminating a sample,
• a driver unit powering said light source
• an analytical detector detecting light emitted from said sample or light transmitted through said sample,
• a spectral control unit comprising
- a spectral detector receiving light from the light source,
- a spectral evaluation and control unit receiving signals from said spectral detector, comparing said signals to reference values and if a deviation is found, to control said driver unit or a light source conditioning unit to bring the signals from the light source into conformity with the reference values.

2. System according to claim 1, wherein the driver unit controls the power applied to the light source.

3. System according to claim 1, wherein the light source conditioning unit controls the temperature of the light source.

4. System according to claims 1 to 3, wherein the intensity of said light source is measured with the analytical detector, the spectral detector or a reference detector and a deviation from a reference intensity by a factor x is being compensated for by either multiplying the measurement with the analytical detector with the factor x or by measuring for a measurement time corrected by a factor x.

5. System according to claim 1, wherein the light source is selected from the group of
- a LED, or
- a lamp with a broad band emission spectrum in combination with a light filtering element.

6. System according to claim 1, wherein said spectral detector comprises a first and a second sensor element having a spectral sensitivity in different wavelength bands.

7. System according to claim 1, wherein the spectral detector is a RGB-sensor.

8. System according to claim 1, wherein said system further comprises an analytical evaluation unit which evaluates light detected by the analytical detector to determine the presence and/or concentration of an analyte in the sample.

9. System according to claim 1, wherein said light source conditioning unit comprises a heater.

10. System according to claim 1, wherein said driver powers the light source periodically.

11. Method for analyzing samples with a spectrally controlled light source, the method comprising the steps of:
- powering the light source with a driver unit to illuminate a sample,
- detecting light emitted by said sample or being transmitted through said sample with an analytical detector
- detecting light from the light source with a spectral detector, said spectral detector transmitting signals to a spectral evaluation and control unit,
- the spectral evaluation and control unit compares said signals to reference values and controls said driver unit or a light source conditioning unit to bring the signals from the spectral detector into conformity with the reference values.

12. Method for analyzing samples according to claim 11, wherein light received by the detector is evaluated to determine the presence and/or concentration of an analyte in the sample.

13. Method according to claim 11, wherein the driver unit controls the power applied to the light source.

14. Method according to claim 11, wherein the light source conditioning unit controls the temperature of the light source.

15. System for amplification of nucleic acids in samples and detection of fluorescence signals from said samples, the system comprising
• a multitude of wells containing samples containing nucleic acids and reagents for amplifying the nucleic acids,
• a holder which holds said multitude of wells,
• a thermal unit which is thermally coupled to the holder, the thermal unit being capable of cycling the holder through temperature excursions,
• a light source for illuminating said samples in the microwells
• a driver unit powering said light source
• an analytical detector detecting fluorescent light emitted from said samples while the samples are cycled through the temperature excursions,
• a spectral control unit comprising
- a spectral detector receiving light from the light source,
- a spectral evaluation and control unit receiving signals from said spectral detector, comparing said signals to reference values and if a deviation is found, to control said driver unit or a light source conditioning unit to bring the signals from the light source into conformity with the reference values.
